(19) Europäisches Patentamt
European Patent Office
Office européen des brevets

(11) **EP 1 359 720 B1**

(12) **EUROPÄISCHE PATENTSCHRIFT**

(45) Veröffentlichungstag und Bekanntmachung des Hinweises auf die Patenterteilung:
**21.02.2007 Patentblatt 2007/08**

(51) Int Cl.:
*H04L 29/06* (2006.01)       *H04L 29/08* (2006.01)

(21) Anmeldenummer: **02009353.0**

(22) Anmeldetag: **03.05.2002**

(54) **Vorrichtung und Verfahren zur Übertragung von Datenpaketen**

Apparatus and method for data packet transmission

Dispositif et procédé pour une transmission de paquets de données

(84) Benannte Vertragsstaaten:
**AT CH DE FR GB LI**

(43) Veröffentlichungstag der Anmeldung:
**05.11.2003 Patentblatt 2003/45**

(73) Patentinhaber: **TecLic Technical Licences GmbH
01097 Dresden (DE)**

(72) Erfinder: **Barth, Ingo, Dr.
85774 Unterföhring (DE)**

(74) Vertreter: **Heselberger, Johannes
Patent- und Rechtsanwälte
Bardehle . Pagenberg . Dost .
Altenburg . Geissler
Galileiplatz 1
81679 München (DE)**

(56) Entgegenhaltungen:
**US-A- 5 317 562**

• **YAVUZ D, EKEN F, KARAVASSILIS N: "Highly survivable communications: complementary media packet switched networks" AGARD CONFERENCE PROCEEDINGS 543, Oktober 1993 (1993-10), Seiten I-1-I-14, XP002219614 Neuilly sur Seine, FR**

**Beschreibung**

Die vorliegende Erfindung betrifft eine Vorrichtung und ein Verfahren zur Übertragung eines Datenstroms, der aus einer Vielzahl von Datenpaketen besteht, unter Verwendung von mindestens zwei Übertragungswegen.

Zur Übertragung von Daten werden grundsätzlich mindestens ein Sender und ein Empfänger verwendet. Zwischen dem Sender und dem Empfänger besteht mindestens ein Übertragungsweg bzw. Übertragungskanal über den die Daten übertragen werden können. Zu diesem Zweck können die Daten in Datenpakete zerlegt werden, die jeweils aus einer bestimmten Menge der zu übertragenen Daten und einer Adressinformation bestehen.

Wenn zwischen dem Sender und dem Empfänger mehr als ein Übertragungsweg besteht, muss für jedes zu übertragende Datenpaket entschieden werden, welcher der zur Verfügung stehenden Übertragungswege verwendet werden soll. Diese Entscheidung über den Übertragungsweg wird auch als routing bezeichnet und wird normalerweise an einer Stelle in dem Sender, dem sogenannten Router durchgeführt, der im folgenden auch als Entscheidungseinheit oder Entscheider bezeichnet wird. Bekannt sind beispielsweise Router, die auf der Grundlage der Adressinformationen der Datenpakete entscheiden, über welchen Übertragungsweg die Datenpakete gesendet werden. Andere Entscheidungskriterien sind beispielsweise die Länge des Übertragungsweges, die voraussichtliche Übertragungszeit, die Qualität der Übertragung, oder vertragliche Absprachen. Die notwendigen Informationen werden dem Router mit geeigneten Mitteln bereitgestellt und dieser entscheidet dann, auf der Grundlage dieser Informationen für jedes Datenpaket, das ihn passiert, über welchen Übertragungsweg es übertragen wird.

Bekannte Sender bestehen aus einer Empfangseinheit zum Empfangen der zu übertragenden Datenpakete, einer Speichereinheit bzw. Puffer zum Speichern der zu übertragenden Datenpakete, einer sich daran anschließenden Entscheidungseinheit und aus mindestens einer Sendeeinheit, wobei die Entscheidungseinheit jedes zu übertragende Datenpaket auf der Grundlage von Entscheidungskriterien einer der Sendeeinheiten, die den verschiedenen Übertragungswegen zugeordnet sind, zuweist. Mit Hilfe dieser Entscheidungseinheit soll sichergestellt werden, dass jedes Datenpaket über den zum Zeitpunkt der Übertragung idealen Übertragungsweg übertragen wird.

Ein solches System ist beispielsweise aus der Veröffentlichung "Highly survivable communications: complementary media packet switched networks" AGARD CONFERENCE PROCEEDINGS 543, Oktober 1993, Seiten bis I-14, Neuilly sur Seine, Frankreich, bekannt. Darin wird ein Übertragungssystem unter der Verwendung von zwei separaten Übertragungswegen offenbart, das selbst bei ungünstigsten Übertragungsbedingungen eine Übertragung der Daten sicherstellt. Dabei wird die Übertragung über den langsameren Übertragungsweg überwacht, und Daten, die nach einer bestimmten Zeit nicht übertragen werden konnten, werden zusätzlich in die Warteschlange für den schnellen Übertragungsweg eingereiht, um in jedem Fall eine Übertragung sicherzustellen.

Ein Nachteil der im Stand der Technik bekannten Entscheider ist, dass während des Wartens der Datenpakete in dem Datenpuffer vor dem Entscheider wertvolle Zeit vergeht.

Eine Aufgabe der vorliegenden Erfindung ist es deshalb, eine neue Vorrichtung zur Auswahl des geeigneten Übertragungswegs für Datenpakete bereitzustellen, bei der die Datenpakete so über die zur Verfügung stehenden Übertragungskanäle übertragen werden, dass die Wartezeit in der Speichereinheit möglichst gering ist.

Erfindungsgemäß wird diese Aufgabe durch eine Vorrichtung zur Übertragung eines Datenstroms unter Verwendung von mindestens zwei Übertragungswegen gelöst, wobei der Datenstrom aus einer Vielzahl von Datenpaketen besteht. Die Vorrichtung besteht aus mindestens einer Empfangseinheit zum Empfangen der zu übertragenden Datenpakete, mindestens einer Speichereinheit zum Speichern der zu übertragenden Datenpakete, wobei in der Speichereinheit die Datenpakete in der Reihenfolge des Eintreffens gespeichert werden, und mindestens zwei Sendeeinheiten zum Senden zu übertragender Datenpakete über einen jeweiligen Übertragungsweg, wobei jeder der Übertragungswege eine spezifische Übertragungszeit pro Datenpaket aufweist. Außerdem enthält die Vorrichtung mindestens eine Entscheidungseinheit. Die Vorrichtung ist so ausgestaltet, dass die mindestens eine Entscheidungseinheit die Datenpakete so auswählt, dass die Datenpakete mit Hilfe der Sendeeinheit über den Übertragungsweg mit einer höheren Übertragungszeit gesendet werden, deren voraussichtliche Speicherzeit in der Speichereinheit im wesentlichen der Differenz der Übertragungszeiten der Übertragungswege entspricht und die anderen Datenpakete mit Hilfe der Sendeeinheit über den Übertragungsweg mit einer niedrigeren Übertragungszeit übertragen werden.

Die Vorrichtung ist so ausgestaltet, dass die in der Speichereinheit gespeicherten Datenpakete möglichst gut auf die zur Verfügung stehenden Übertragungswege verteilt werden. Die mindestens eine Entscheidungseinheit wählt die Datenpakete zur Übertragung mit Hilfe einer der anderen Sendeeinheiten über einen der anderen Übertragungswege mit höheren Übertragungszeiten aus, dessen Übertragungszeit im wesentlichen der Summe aus der geringsten Übertragungszeit und der voraussichtlichen Speicherzeit des Datenpakets in der Speichereinheit bis es mit der Sendeeinheit mit der geringsten Übertragungszeit gesendet würde, entspricht.

Die erfindungsgemäße Vorrichtung, die auch als Sender bezeichnet werden kann, besteht aus mehreren Einheiten, die im folgenden anhand ihrer Funktion beschrieben werden. Die zu übertragenden Datenpakete werden in einer sogenannten Empfangseinheit von dem Sender empfangen. Ein Beispiel für eine geeignete Empfangseinheit ist eine einfache Eingangs-/ Ausgangsschnittstelle. Weitere Beispiele für im Rahmen der vorliegenden Erfindung geeignete Empfangseinheiten, sind Funkempfänger, wie beispielsweise Mobiltelefone. Eine solche Empfangseinheit kann beispielsweise auch Teil einer Set-Top-Box sein.

Im Rahmen der vorliegenden Erfindung kann die Empfangseinheit sowohl Datenpakete von einer Quelle, also von einem weiteren Sender, oder auch von mehreren Quellen bzw. Sendern empfangen. Die empfangenen Daten bzw. Datenpakete werden dann in einer Speichereinheit zwischengespeichert.

Die von der Empfangseinheit empfangenen Datenpakete sollen im Rahmen der vorliegenden Erfindung von dem Sender an einen Empfänger über einen Übertragungsweg übertragen werden. Hierfür verfügt der erfindungsgemäße Sender über eine Sendeeinheit, die dafür geeignet ist, die zu übertragenden Datenpakete derart über den mit dem Sender in Verbindung stehenden Übertragungskanal zu übertragen, dass der Empfänger die empfangenen Datenpakete weiter verwenden kann. Hierzu ist es beispielsweise regelmäßig notwendig, dass die zu übertragenen Datenpakete von den Sendeeinheiten entsprechend der verwendeten Übertragungskanäle, modifiziert werden, so dass die zu übertragenden Datenpakete dem in dem jeweiligen Übertragungskanal üblichen Übertragungsprotokoll entsprechen. Hierzu gehört auch die Modifizierung der Daten um eine etwaige Fehlerkorrektur beim Empfänger zu ermöglichen bzw. zu verbessern. Des weiteren kann eine Modifizierung der Datenpaketgrößen in Abhängigkeit von dem verwendeten Übertragungskanal notwendig sein.

Im Rahmen der vorliegenden Erfindung besteht der Sender aus mindestens zwei Sendeeinheiten, die geeignet sind die Datenpakete jeweils über einen Übertragungskanal zu übertragen.

Darüber hinaus besteht der erfindungsgemäße Sender noch aus mindestens einer Entscheidungseinheit, die für jedes zu übertragende Datenpaket entscheidet, mit welcher der Sendeeinheiten und damit über welchen Übertragungskanal die Datenpakete übertragen werde sollen.

Erfindungsgemäß entscheidet die Entscheidungseinheit auf der Grundlage der Übertragungszeiten der Übertragungskanäle und auf der Grundlage der voraussichtlichen Speicherzeit in dem Sender. Dabei ist eine geeignete Definition der Übertragungszeit eines Übertragungskanals die Zeit, die ein Datenpaket benötigt um in der Sendeeinheit eventuell modifiziert zu werden, über den Datenkanal übertragen zu werden und bei dem Empfänger wieder zu dem ursprünglichen Datenpaket zurückmodifiziert zu werden. Des weiteren sind in der Übertragungszeit auch Verzögerungen, die durch Puffer in den Kanälen oder durch Änderung der zur Verfügung stehenden Bandbreite verursacht werden können, berücksichtigt. Im Rahmen der vorliegenden Erfindung kann die Übertragungszeit allerdings auch mit anderen Anfangs- oder Endpunkten definiert werden. Die Speicherzeit, auf deren Grundlage die Entscheidungseinheit auch entscheidet, gibt die voraussichtliche Zeit wieder, die ein bestimmtes Datenpaket noch in der Speichereinheit des Senders gespeichert wäre, bevor es mit einer Sendeeinheit mit einer kürzeren Übertragungszeit oder der Sendeeinheit mit der kürzesten Übertragungszeit übertragen würde.

Die Datenpakete, die mit Hilfe der Sendeeinheit übertragen werden, die dem Übertragungskanal mit einer längeren beziehungsweise höheren Übertragungszeit zugeordnet ist, werden in der Entscheidungseinheit auf der Grundlage der folgenden Abwägung ausgewählt. Zuerst einmal müssen soviel Datenpakete in der Speichereinheit gespeichert sein, dass die voraussichtliche Speicherzeit, also die Zeit, die die Datenpakete noch in der Speichereinheit verbringen würden, wenn sie über den Übertragungskanal mit der kürzeren Übertragungszeit übertragen würden, zumindest der Differenz der Übertragungszeiten der beiden Kanäle entspricht. Wenn dies der Fall ist und in der entsprechenden Sendeeinheit Kapazität frei ist, wird von der Entscheidungseinheit das Datenpaket in der Speichereinheit ausgewählt, dessen voraussichtliche Speicherzeit am nächsten an dieser Differenz liegt. Dieses ausgewählte Datenpaket wird dann über den Übertragungskanal mit der höheren Übertragungszeit übertragen.

Im Rahmen der vorliegenden Erfindung ist es wichtig, dass nicht die Datenpakete mit der voraussichtlich höchsten Speicherzeit für den alternativen Übertragungskanal ausgewählt werden, sondern die Datenpakete, deren voraussichtliche Speicherzeit der Differenz der Übertragungszeiten entspricht. Dadurch wird nicht nur die Wartezeit der Datenpakete in der Sendeeinheit sinnvoll genutzt, sondern auch sichergestellt, dass die Datenpakete beim Empfang auch annähernd in der richtigen Reihenfolge ankommen und damit der Aufwand für das Sortieren der Datenpakete vor der Weiterverarbeitung beziehungsweise vor dem Weiterleiten möglichst gering ist. Diese Zeitersparnis wirkt sich insbesondere dann aus, wenn ein Datenpaket bei der Übertragung verloren geht. Durch den erfindungsgemäßen Entscheidungsprozess kann das Zeitfenster in dem ein bestimmtes Datenpaket erwartet wird sehr klein gewählt werden. Dadurch wird der Verlust eines Datenpakets sehr schnell festgestellt und das verloren gegangene Datenpaket kann im Vergleich zu bekannten Verfahren wesentlich früher erneut angefordert werden.

Im Rahmen der vorliegenden Erfindung ist die Entscheidungseinheit in dem Sender vorzugsweise geeignet, auf sich ändernde Übertragungszeiten der Übertragungskanäle zu reagieren. Dafür verfügt die Entscheidungseinheit über mindestens einen Eingang über den ihr derartige relevante Informationen zukommen können.

In einer weiter bevorzugten Ausführungsform der vorliegenden Erfindung stehen dem Sender mindestens drei Übertragungskanäle mit jeweils zugeordneten Sendeeinheiten zur Verfügung. Dabei werden mindestens zwei Entscheidungseinheiten verwendet, die aber auch in einer Entscheidungseinheit angeordnet sein können. Dabei wählt die zweite Entscheidungseinheit die Datenpakete so aus, dass die Datenpakete mit Hilfe der Sendeeinheit über den Übertragungsweg mit einer weiter geringeren Übertragungszeit gesendet werden, deren voraussichtliche Speicherzeit in der Speichereinheit im wesentlichen der Differenz zwischen der Übertragungszeit dieser Sendeeinheit und der nächst geringeren Übertragungszeit entspricht.

Im Rahmen der vorliegenden Erfindung wird auch ein Verfahren zur Auswahl eines Übertragungswegs aus mindestens zwei Übertragungswegen zum Senden von Datenpaketen beansprucht, wobei das Verfahren die folgenden Schritte umfasst:

- Empfangen der zu übertragenden Datenpakete mit mindestens einer Empfangseinheit,
- Speichern der zu übertragenden Datenpakete mit mindestens einer Speichereinheit, wobei in der Speichereinheit die Datenpakete in der Reihenfolge des Eintreffens gespeichert werden,
- Senden der zu übertragenden Datenpakete über einen jeweiligen Übertragungsweg mit einem von mindestens zwei Sendeeinheiten, wobei jeder der Übertragungswege eine Übertragungszeit pro Datenpaket aufweist, und
- Auswählen der Datenpaket mit mindestens einer Entscheidungseinheit, so dass
  die Datenpakete mit Hilfe der Sendeeinheit über einen Übertragungsweg mit einer höheren Übertragungszeit gesendet werden, deren voraussichtliche Speicherzeit in der Speichereinheit im wesentlichen der Differenz zwischen den Übertragungszeiten entspricht und
  die anderen Datenpakete mit Hilfe der Sendeeinheit über den Übertragungsweg mit einer niedrigeren Übertragungszeit übertragen werden.

Eine bevorzugte Ausführungsform des erfindungsgemäßen Verfahrens weist zusätzlich folgenden Schritt auf:

- Auswählen der Datenpaket mit einer zweiten Entscheidungseinheit, so dass die Datenpakete mit Hilfe der Sendeeinheit über den Übertragungsweg gesendet werden, deren voraussichtliche Speicherzeit in der Speichereinheit im wesentlichen der Differenz zwischen den Übertragungszeiten entspricht.

Ein Ausführungsbeispiel der erfindungsgemäßen Vorrichtung wird im folgenden anhand der beiliegenden Figuren beschrieben, in denen

Figur 1:    ein Netzwerks zeigt, in dem die erfindungsgemäße Vorrichtung verwendet werden kann, und
Figur 2:    ein Blockschalbild einer Ausführungsform der erfindungsgemäßen Vorrichtung zeigt.

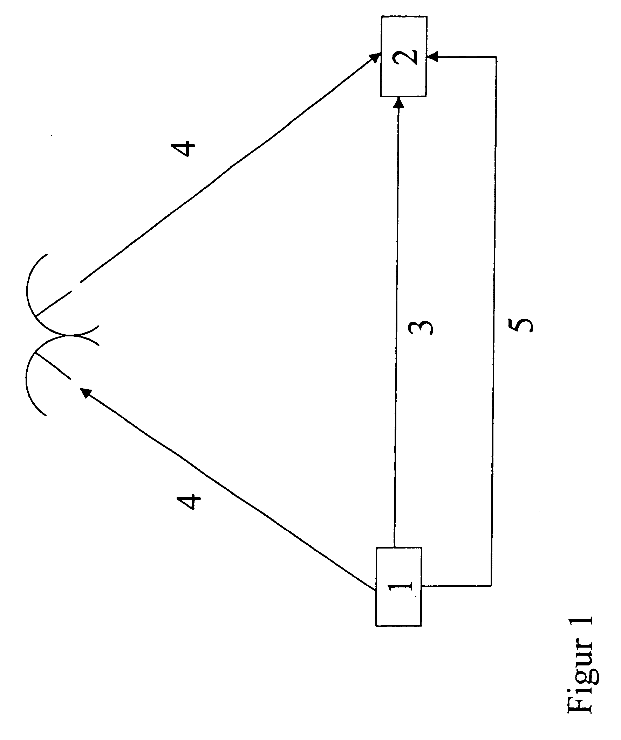

Figur 1 zeigt eine Skizze eines Netzwerks, wie es im Rahmen der vorliegenden Erfindung verwendet werden kann. In diesem Netzwerk gibt es einen Sender 1 und einem Empfänger 2, die über einen Übertragungsweg 3, beispielsweise eine Telefonleitung, und über einen weiteren Übertragungsweg 4, beispielsweise eine Satellitenverbindung, miteinander verbunden sind. In einer bevorzugten Ausführungsform der vorliegenden Erfindung besteht zwischen dem Sender 1 und dem Empfänger 2 ein weiterer Übertragungskanal 5.

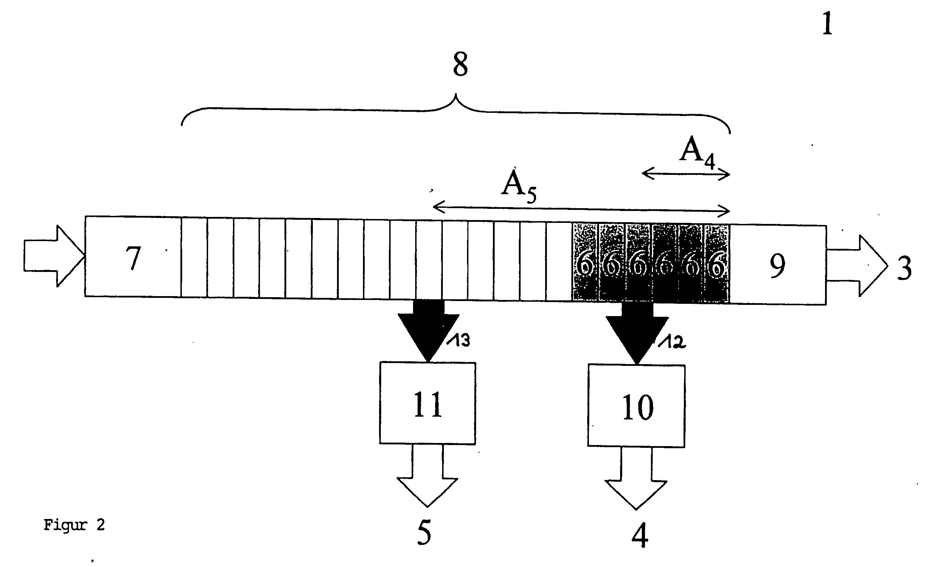

Figur 2 zeigt eine Ausführungsform einer erfindungsgemäßen Vorrichtung 1 mit einen Eingang 7, über den die Daten beispielsweise direkt im Form von Datenpaketen 6 der Vorrichtung 1 zugeführt werden können. Diese Datenpakete 6 werden dann in einer Speichereinheit 8, beispielsweise einem Datenpuffer, zwischengespeichert, bevor sie der mindestens einen Entscheidungseinheit 12, 13 zugeführt werden. Jeder Entscheidungseinheit ist jeweils eine Sendeeinheit 10, 11 und ein zugehöriger Übertragungsweg 4, 5 zugeordnet.

In der vorliegenden Ausführungsform werden zwei Entscheidungseinheiten 12, 13 verwendet, die aber auch in einer räumlichen Einheit zusammengefasst sein können. Die Entscheidungseinheit 12 ist vorzugsweise so an der Speichereinheit 8 angeordnet, dass genau die Datenpakete 6 aus der Speichereinheit 8 entnommen werden können, bei denen die Zeit die die Datenpakete 6 in der Speichereinheit 8 verbringen würden bis sie zur nächsten Sendeeinheit 9 gelangen, im wesentlichen der Differenz der Übertragungszeiten $t_3$, $t_4$ der beiden Sendeeinheiten 9, 10 entspricht. In der in Figur 2 dargestellten Ausführungsform ist eine weitere Entscheidungseinheit 13 so an der Speichereinheit 8 angeordnet, dass genau die Datenpakete 6 aus der Speichereinheit 8 entnommen werden können, bei denen die Zeit die die Datenpakete 6 in der Speichereinheit 8 verbringen würden bis sie zur nächsten Sendeeinheit 10 gelangen, im wesentlichen der Differenz der Übertragungszeiten $t_4$, $t_5$ der beiden Sendeeinheiten 10, 11 entspricht.

Die Entscheidungseinheiten 12, 13 entscheiden dann in Abhängigkeit davon, ob die jeweilige Sendeeinheit 10, 11 bereit ist ein Datenpaket 6 zu verarbeiten für jedes Datenpaket 6, ob dieses weiter in der Speichereinheit 8 wartet, bis es mit einer Sendeeinheit mit einer höheren Übertragungszeit übertragen werden kann, oder ob es direkt über die zugehörige Sendeeinheite 10, 11 übertragen wird.

Die Übertragungszeit für jeden Übertragungskanal ergibt sich aus der Summe der Signalverzögerungszeit und der Übertragungsdauer eines Pakets, wobei die Signalverzögerungszeit durch den Quotienten aus der Weglänge und der Ausbreitungsgeschwindigkeit bestimmt wird und die Übertragungsdauer eines Pakets dem Quotienten aus der Paketgröße und der Bitrate entspricht.

In dem vorliegenden Beispiel handelt es sich bei dem Übertragungskanal 3 um eine normale Modemverbindung mit einer konstanter Bitrate $B_3$. Der Übertragungskanal 4 ist in dem vorliegenden Beispiel ein Kabel-Return-Channel mit einer variablen Bitrate $B_4$ und einer Übertragungszeit $t_4$, die größer ist, als die Übertragungszeit beim Übertragungskanal 3 $t_3$. Als dritter Übertragungskanal 5 wird in dem vorliegenden Beispiel ein MPEG-IP-Encapsulation Channel mit variabler Bitrate $B_5$ und einer Übertragungszeit $t_5$ verwendet, die größer ist, als die bei den beiden anderen Übertragungskanälen 3, 4.

Auf der Grundlage dieser Informationen kann bestimmt werden an welchen Stellen der Speichereinheit 8 die Teilentscheidungseinheiten 12, 13 angeordnet sind.

Da der Übertragungskanal 3 die geringste Übertragungszeit aufweist, wird er am Ende der Speichereinheit 8 angeordnet. Die Stelle der Speichereinheit 8 an der die Teilentscheidungseinheit 12 für den Übertragungskanal 4 angeordnet ist, berechnet sich nach folgender Formel:

$$A_4 = (t_4 - t_3) * B_3 \qquad\qquad (1)$$

Die Teilentscheidungseinheit 12 wird gemäß der Formel (1) vorzugsweise $A_4$ bit von der Sendeeinheit 9 entfernt angeordnet. Vorzugsweise wird die Teilentscheidungseinheit 12 allerdings so angeordnet, dass sie auf ein Datenpaket 6 in der Speichereinheit 8 zugreifen kann.

Die Stelle der Speichereinheit 8 an der die Teilentscheidungseinheit 12 für den Übertragungskanal 5 angeordnet ist, berechnet sich nach folgender Formel:

$$A_5 = (t_5 - t_3) * B_3 + (t_5 - t_4) * B_4 \qquad\qquad (2)$$

Die Teilentscheidungseinheit 13 wird gemäß der Formel (2) vorzugsweise $A_5$ bit von der Sendeeinheit 9 entfernt angeordnet beziehungsweise so, dass sie auf ein Datenpaket 6 in der Speichereinheit 8 zugreifen kann.

Wenn sich die Bitrate des Übertragungskanals 4 verändert, wird die Stelle, an der die Teilentscheidungseinheit 13 für den Übertragungskanal 5 angeordnet ist vorzugsweise entsprechend der Formel (2) verschoben. Dadurch kann sichergestellt werden, dass die Datenpakete 6 etwa zur selben Zeit beim Empfänger 2 ankommen. Sollten auch die Verzögerung oder die Bitrate des Übertragungskanals 3 variable sein, so wird vorzugsweise auch die Stelle an der die Teilentscheidungseinheit 12 für den Übertragungskanal 4 angeordnet ist entsprechend der Formel (1) verschoben.

Bei vier und mehr möglichen Übertragungskanälen werden die zugehörigen Teilentscheidungseinheiten entsprechend angeordnet.

**Patentansprüche**

1. Vorrichtung (1) zur Übertragung eines Datenstroms unter Verwendung von mindestens zwei Übertragungswegen (3, 4, 5), wobei der Datenstrom aus einer Vielzahl von Datenpaketen (6) besteht und wobei die Vorrichtung (1) die folgenden Einheiten aufweist:

   - mindestens eine Empfangseinheit (7) zum Empfangen der zu übertragenden Datenpakete (6)
   - mindestens eine Speichereinheit (8) zum Speichern der zu übertragenden Datenpakete (6)
   - mindestens eine erste und eine zweiten Sendeeinheit (9,10, 11) zum Senden zu übertragender Datenpakete (6) über einen ersten Übertragungsweg (3) oder zumindest einen zweiten Übertragungsweg (4, 5), wobei der erste Übertragungsweg (3) eine erste Übertragungszeit pro Datenpaket (6) aufweist und der zumindest eine zweite Übertragungsweg eine längere Übertragungszeit pro Datenpaket aufweist;
   - mindestens eine Entscheidungseinheit (12, 13),
   **dadurch gekennzeichnet, dass**
   - die Speichereinheit (8) eine gemeinsame Speichereinheit für den ersten und den zweiten Übertragungsweg ist;
   - in der Speichereinheit (8) die Datenpakete (6) in der Reihenfolge des Eintreffens über eine Speicherzeit hinweg gespeichert werden; und
   - die mindestens eine Entscheidungseinheit (12) die Datenpakete (6) so auswählt, dass
   ein Datenpaket (6) mit Hilfe der zweite Sendeeinheit (10) über den zumindest einen zweiten Übertragungsweg (4) gesendet wird, wenn die voraussichtliche Speicherzeit des Datenpakets in der Speichereinheit (8) bis zum Senden über den ersten Übertragungsweg zumindest der Differenz zwischen der zweiten Übertragungszeit und der ersten Übertragungszeit entspricht, und wenn das Datenpaket (6) in der Speichereinheit eine voraussichtliche Speicherzeit für die Übertragung über den ersten Übertragungsweg aufweist, die voraussichtlich am nächsten an dieser Differenz liegt;

- andere Datenpakete (6) mit Hilfe der ersten Sendeeinheit (9) über den ersten Übertragungsweg (3) übertragen werden.

**2.** Vorrichtung (1) gemäß Anspruch 1 **dadurch gekennzeichnet, dass** die Vorrichtung (1) eine zweite Entscheidungseinheit (13) aufweist, die Datenpakete (6) so auswählt, dass

- ein Datenpaket (6) mit Hilfe einer dritten Sendeeinheit (11) über einen dritten Übertragungsweg (5) mit einer dritten Übertragungszeit gesendet wird, wenn seine voraussichtliche Speicherzeit bis zum Versenden mit der zweiten Sendeeinheit zumindest der Differenz zwischen der dritten Übertragungszeit und der zweiten Übertragungszeit entspricht und wenn das Datenpaket (6) in der Speichereinheit eine voraussichtliche Speicherzeit für die Übertragung über den zweiten Übertragungsweg aufweist, die voraussichtlich am nächsten an dieser Differenz liegt.

**3.** Verfahren zur Auswahl eines Übertragungswegs zum Senden von Datenpaketen (6) auf einem ersten Übertragungsweg (3) mit einer ersten Übertragungszeit und mindestens einem zweiten Übertragungsweg (4, 5) mit einer zweiten Übertragungszeit pro Datenpaket (6) wobei das Verfahren die folgenden Schritte umfasst:

- Empfangen der zu übertragenden Datenpakete (6) mit mindestens einer Empfangseinheit (7),
- Speichern der zu übertragenden Datenpakete (6) mit mindestens einer Speichereinheit (8),
- Senden der zu übertragenden Datenpakete (6) über den ersten (3) oder den zumindest einen zweiten Übertragungsweg (4, 5) mit einer ersten oder zumindest einer zweiten Sendeeinheit (9, 10, 11),

**dadurch gekennzeichnet, dass**

- die Speichereinheit (8) eine gemeinsame Speichereinheit für den ersten und den zweiten Übertragungswege ist;
- die Speichereinheit (8) eine Speichereinheit (8) für die Datenpakete (6) ist, in der sie in der Reihenfolge des Eintreffens gespeichert werden,
- die Datenpakete (6) mit mindestens einer Entscheidungseinheit (12), so ausgewählt werden, dass
ein Datenpaket (6) mit Hilfe der zweiten Sendeeinheit (10) über den zumindest einen zweiten Übertragungsweg (4, 5) gesendet wird, wenn die voraussichtliche Speicherzeit in der gemeinsamen Speichereinheit (8) bis zum Senden über den ersten Übertragungsweg zumindest der Differenz zwischen der zweiten Übertragungszeit und der ersten Übertragungszeit entspricht und wenn das Datenpaket (6) in der Speichereinheit eine voraussichtliche Speicherzeit für die Übertragung über den ersten Übertragungsweg aufweist, die voraussichtlich am nächsten an dieser Differenz liegt;
- andere Datenpakete (6) mit Hilfe der ersten Sendeeinheit (9) über den ersten Übertragungsweg (3) übertragen werden.

**4.** Verfahren gemäß Anspruch 3, wobei das Verfahren zusätzlich folgenden Schritt umfasst:

Auswählen der Datenpakete (6) mit einer zweiten Entscheidungseinheit (13), so dass ein Datenpaket (6) mit Hilfe einer dritten Sendeeinheit (11) über einen dritten Übertragungsweg (5) mit einer dritten Übertragungszeit gesendet wird, wenn seine voraussichtliche Speicherzeit in der Speichereinheit (8) bis zum Versenden mit der zweiten Sendeeinheit (10) zumindest der Differenz zwischen der dritten Übertragungszeit und der zweiten Übertragungszeit entspricht und wenn das Datenpaket (6) in der Speichereinheit eine voraussichtliche Speicherzeit für die Übertragung über den zweiten Übertragungsweg aufweist, die voraussichtlich am nächsten an dieser Differenz liegt.

## Claims

**1.** Device (1) for transmission of a data stream using at least two transmission paths (3, 4, 5) wherein the data stream is made out of a plurality of data packets (6) and wherein the device (1) comprises the following units:

- at least one receiver unit (7) for receiving the data packets (6) which are to be transmitted;
- at least one storage unit (8) for storage of the data packets (6) which are to be transmitted;
- at least a first and a second transmitter unit (9, 10, 11) for transmitting data packets (6) which are to be transmitted via a first transmission path (3) or at least one second transmission path (4, 5), wherein the first transmission path (3) comprises a first transmission time per data packet (6) and the at least one second transmission path comprises a longer transmission time per data packet;
- at least one decision unit (12, 13),

**characterized in that**

- the storage unit (8) is a common storage unit for the first and the second transmission path;
- during a storage time the data packets (6) are stored in the storage unit (8) in the order of arrival; and
- the at least one decision unit (12) chooses the data packets (6) in such a way that

a data packet (6) is sent with the help of the second transmitter unit (10) via the at least one second transmission path (4), if the estimated storage time of the data packet in the storage unit (8) until it sent over the first transmission path corresponds at least to the difference between the second transmission time and the first transmission time and if the data packet (6) in the storage unit comprises an estimated storage time for the transmission via the first transmission path which presumably is closest to this difference;

- Other data packets (6) are transmitted over the first transmission path (3) with the help of the first transmitter unit (9).

2. Device (1) according to claim 1 **characterized in that** the device (1) comprises a second decision unit (13) which chooses data packets (6) in such a way that

- a data packet (6) is sent via a third transmission path (5) with the help of a third transmitting unit (11) with a third transmission time, if its estimated storage time until it is sent by the second transmitter unit corresponds at least to the difference between the third transmission time and the second transmission time and if the data packet (6) comprises an estimated storage time in this storage unit for the transmission via the second transmission path which is presumably closest to this difference.

3. Method for selecting a transmission path for sending data packets (6) via a first transmission path (3) with a first transmission time and with at least a second transmission path (4, 5) with a second transmission time per data packet (6), wherein the method comprises the following steps:

- receiving the data packets (6) which are to be transmitted with at least one receiver unit (7),
- storing the data packets (6) which are to be transmitted with at least one storage unit (8),
- sending the data packets (6) which are to be transmitted via the first (3) or the at least one second transmission path (4, 5) with a first or at least one second transmitter unit (9, 10, 11),

**characterized in that**

- the storage unit (8) is a common storage unit for the first and the second transmission path;
- the storage unit (8) is a storage unit (8) for the data packets (6) in which they are stored in the order of arrival,
- the data packets (6) are selected with at least one decision unit (12) in such a way that

a data packet (6) is sent via the at least one second transmission path (4, 5) with the help of the second transmitter unit (10), if the estimated storage time in the common storage unit (8), until it is sent via the first transmission path, corresponds at least to the difference between the second transmission time and the first transmission time and if the data packet (6) in the storage unit comprises an estimated storage time for the transmission via the first transmission path which is presumably closest to this difference;

- other data packets (6) are transmitted via the first transmission path (3) with the help of the first transmitter unit (9).

4. Method according to claim 3, wherein in addition the method comprises the following step:

Selecting the data packets (6) with a second decision unit (13) such that a data packet (6) is sent via a third transmission path (5) with a third transmission time with the help of the third transmitter unit (11), if its estimated storage time in the storage unit (8), until it is sent with the second transmitter unit (10), corresponds at least to the difference between the third transmission time and the second transmission time and if the data packet (6) in the storage unit comprises an estimated storage time for the transmission via the second transmission path which is presumably closest to this difference.

**Revendications**

1. Dispositif (1) pour la transmission d'un flux de données utilisant au moins deux trajets de transmission (3, 4, 5), le flux de données étant constitué d'une pluralité de paquets de données (6) et le dispositif (1) comportant les modules suivants :

   - au moins un module de réception (7) pour recevoir les paquets de données à transmettre (6)
   - au moins un module de mémoire (8) pour mémoriser les paquets de données à transmettre (6)
   - au moins un premier et un second module d'émission (9, 10, 11) pour émettre des paquets de données à transmettre (6) par l'intermédiaire d'un premier trajet de transmission (3) ou d'au moins un second trajet de transmission (4, 5), le premier trajet de transmission (3) possédant un premier temps de transmission par paquets de données (6), et le second trajet de transmission au nombre d'au moins un possédant un temps de transmission supérieur par paquets de données ;
   - au moins un module de décision (12, 13),

   **caractérisé en ce que**
   - le module de mémoire (8) est un module de mémoire commun au premier et au second trajet de transmission ;
   - dans le module de mémoire (8), les paquets de données (6) sont mémorisés dans l'ordre de leur arrivée sans tenir compte du temps de rétention en mémoire ; et
   - le module de décision au nombre d'au moins un (12) sélectionne les paquets de données (6) de façon qu'un paquet de données (6) soit émis à l'aide du second module d'émission (10) par l'intermédiaire du second trajet de transmission au nombre d'au moins un (4) si le temps estimé de rétention en mémoire du paquet de données dans le module de mémoire (8) jusqu'à l'émission par l'intermédiaire du premier trajet de transmission correspond au moins à la différence entre le second temps de transmission et le premier temps de transmission, et si le paquet de données (6) présent dans le module de mémoire possède, pour la transmission par l'intermédiaire du premier trajet de transmission, un temps estimé de rétention en mémoire qui, selon toute probabilité, est le plus proche de cette différence ;
   - d'autres paquets de données (6) sont transmis à l'aide du premier module d'émission (9) par l'intermédiaire du premier trajet de transmission (3).

2. Dispositif (1) selon la revendication 1, **caractérisé en ce que** le dispositif (1) comporte un second module de décision (13) qui sélectionne des paquets de données (6) de façon que :

   - un paquet de données (6) soit émis à l'aide d'un troisième module d'émission (11) par l'intermédiaire d'un troisième trajet de transmission (5) avec un troisième temps de transmission si son temps estimé de rétention en mémoire jusqu'à son envoi par le second module d'émission correspond au moins à la différence entre le troisième temps de transmission et le second temps de transmission et si le paquet de données (6) présent dans le module de mémoire possède, pour la transmission par l'intermédiaire du second trajet de transmission, un temps estimé de rétention en mémoire qui, selon toute probabilité, est le plus proche de cette différence.

3. Procédé pour sélectionner un trajet de transmission pour émettre des paquets de données (6) sur un premier trajet de transmission (3) possédant un premier temps de transmission et sur au moins un second trajet de transmission (4, 5) possédant un second temps de transmission par paquet de données (6), le procédé comprenant les étapes suivantes :

   - réception des paquets de données à transmettre (6) par au moins un module de réception (7),
   - mémorisation des paquets de données à transmettre (6) par au moins un module de mémoire (8),
   - émission des paquets de données à transmettre (6) par l'intermédiaire du premier (3) ou du second trajet de transmission au nombre d'au moins un (4, 5) par un premier ou au moins un second module d'émission (9, 10, 11),

   **caractérisé en ce que**

   - le module de mémoire (8) est un module de mémoire commun au premier et au second trajet de transmission ;
   - le module de mémoire (8) est un module de mémoire (8) pour les paquets de données (6),

   dans lequel ceux-ci sont mémorisés dans l'ordre de leur arrivée,

   - les paquets de données (6) sont sélectionnés par au moins un module de décision (12), de façon qu'un paquet de données (6) soit émis à l'aide du second module d'émission (10) par l'intermédiaire du second trajet de transmission au nombre d'au moins un (4, 5) si le temps estimé de rétention en mémoire dans le module de mémoire commun (8) jusqu'à l'envoi par l'intermédiaire du premier trajet de transmission correspond au moins à la différence entre le second temps de transmission et le premier temps de transmission et si le paquet de données (6) présent dans le module de mémoire possède, pour la transmission par l'intermédiaire du premier trajet de transmission, un temps estimé de rétention en mémoire qui, selon toute probabilité, est le plus proche de cette différence ;

- d'autres paquets de données (6) sont transmis à l'aide du premier module d'émission (9) par l'intermédiaire du premier trajet de transmission (3).

4.  Procédé selon la revendication 3, le procédé comprenant en plus l'étape suivante :

Sélection des paquets de données (6) par un second module de décision (13), de façon qu'un paquet de données (6) soit émis à l'aide d'un troisième module d'émission (11) par l'intermédiaire d'un troisième trajet de transmission (5) possédant un troisième temps de transmission si son temps estimé de rétention dans le module de mémoire (8) jusqu'à son envoi par le second module d'émission (10) correspond au moins à la différence entre le troisième temps de transmission et le second temps de transmission et si le paquet de données (6) présent dans le module de mémoire possède, pour la transmission par l'intermédiaire du second trajet de transmission, un temps estimé de rétention en mémoire qui, selon toute probabilité, est le plus proche de cette différence.

Figur 1

Figur 2

EP 1 359 720 B1